(19) Europäisches Patentamt
European Patent Office
Office européen des brevets

(11) **EP 4 138 248 A1**

(12) **EUROPÄISCHE PATENTANMELDUNG**

(43) Veröffentlichungstag:
**22.02.2023   Patentblatt 2023/08**

(21) Anmeldenummer: **21191897.4**

(22) Anmeldetag: **18.08.2021**

(51) Internationale Patentklassifikation (IPC):
***H02J 3/06*** (2006.01)

(52) Gemeinsame Patentklassifikation (CPC):
**H02J 3/06;** H02J 2203/10; H02J 2203/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Kalysh, Ileskhan**
**91058 Erlangen (DE)**
• **Schreck, Sebastian**
**90439 Nürnberg (DE)**
• **Thiem, Sebastian**
**91413 Neustadt an der Aisch (DE)**

(54) **VERFAHREN UND STEUERVORRICHTUNG ZUR STEUERUNG VON ENERGIEAUSTAUSCHEN ZWISCHEN MEHREREN ENERGIESYSTEMEN**

(57)     Es wird ein Verfahren zur Steuerung von Energieaustauschen zwischen mehreren Energiesystemen i mittels einer bezüglich der Energiesysteme zentralen Steuervorrichtung vorgeschlagen, wobei die Steuerung auf zeitabhängigen und mit den Energieaustauschen assoziierten Sollleistungen basiert, die mittels einer numerischen Optimierung basierend auf Verbrauchsprognosen $P_{i;t}^{L}$ und/oder Erzeugungsprognosen $P_{i;t}^{G}$ der einzelnen Energiesysteme für einen Zeitbereich **T** ermittelt werden, wobei sich durch die Differenz zwischen Gesamtverbrauchprognose $L_t = \sum_i P_{i;t}^{L}$ und Gesamterzeugungsprognose $G_t = \sum_i P_{i;t}^{G}$ eine zeitabhängige Restlast $R_t = L_t - G_t$ ausbildet. Das Verfahren ist gekennzeichnet dadurch, dass für die Optimierung eine Zielfunktion verwendet wird, welche die zu ermittelnden Sollleistungen mit einer zeitabhängigen Restlastgewichtung $g_t$ gewichtet, wobei die Steuervorrichtung die von der Restlast $R_t$ abhängige Restlastgewichtung $g_t$ dadurch bestimmt, dass die mit der Gesamtverbrauchsprognose $L_t$ gewichtete betragsmäßige Differenz zwischen der zu berechnenden Restlastgewichtung $g_t$ und einer zeitlich konstanten Restlastgewichtung $g_0$ minimiert wird.

Weiterhin betrifft die Erfindung ein Steuervorrichtung zur Durchführung des Verfahrens.

FIG 2

**Beschreibung**

Die Erfindung betrifft ein Verfahren gemäß dem Oberbegriff des Patentanspruches 1 sowie eine Steuervorrichtung gemäß dem Oberbegriff des Patentanspruches 11.

Ein grundlegendes technisches Problem ist die Steuerung von lokalen Energieaustauschen zwischen mehreren Energiesystemen über ein Versorgungsnetz, insbesondere ein Stromnetz. Die Energiesysteme können Stadtteile, Gemeinden, Wohngebäude, Bürogebäude, industriele Anlagen und/oder Windkraftanlagen sein. Typischerweise umfassen die Energiesysteme energietechnische Anlagen, die Energie aus dem Versorgungsnetz ausspeisen (Verbrauch) und/oder für weitere Energiesysteme in das Versorgungsnetz einspeisen (Erzeugung). Beispielsweise umfassen Wohngebäude vermehrt Photovoltaikanlagen sowie Batteriespeicher.

Die Energiesysteme können hierbei ein Energiemanagementsystem zur intelligenten Steuerung ihres Verbrauchs und/oder Erzeugung umfassen.

Die Steuerung beziehungsweise Koordination der Energieaustausche zwischen den Energiesystemen kann im Rahmen eines lokalen Energiemarktes erfolgen. Technisch realisiert wird der lokale Energiemarkt beispielsweise durch eine bezüglich der Energiesysteme zentralen Steuervorrichtung, die die Energieaustausche zwischen den Energiesystemen koordiniert. Hierzu können die einzelnen Energiesysteme, beispielsweise durch ihr Energiemanagementsystem, eine Prognose für ihren zu erwartenden Verbrauch und/oder Erzeugung vorab an die Steuervorrichtung übermitteln. Die Steuervorrichtung bringt diese dann im Rahmen einer numerischen Optimierung möglichst in Übereinstimmung (englisch: Matching), beispielsweise indem das sogenannte Gemeinwohl (englisch: Social Welfare) maximiert wird.

Dadurch wird technisch Verbrauch und Erzeugung innerhalb des lokalen Energiemarktes möglichst in Übereinstimmung gebracht, sodass sich innerhalb des lokalen Energiemarktes beziehungsweise des zugehörigen Versorgungsnetzes eine möglichst geringe Restlast (englisch: Residual Load) ausbildet.

Eine Steuervorrichtung für einen lokalen Energiemarkt (Energiemarktplattform, Handelsplattform) ist beispielsweise aus dem Dokument EP 3518369 A1 bekannt.

Bekannte lokale Energiemärkte beziehungsweise zugehörige Steuervorrichtung können jedoch eine vollständige Übereinstimmung von Verbrauch und Erzeugung nicht sicherstellen. Der Stand der Technik versucht daher sogenannte flexible Anlagen, die einen zeitlich flexiblen Verbrauch beziehungsweise Erzeugung aufweisen, zu integrieren und zu berücksichtigen. In klassischen Stromnetzen wird durch Tag- und Nachttarife versucht Einfluss auf flexible Lasten zu nehmen, sodass diese gegebenenfalls zu weniger belasteter Zeiten, das heißt in die Nacht, verschoben werden.

Der vorliegenden Erfindung liegt die Aufgabe zugrunde, lokalen Verbrauch und lokale Erzeugung innerhalb eines Versorgungsnetzes, insbesondere für einen lokalen Energiemarkt, verbessert in Übereinstimmung zu bringen.

Die Aufgabe wird durch ein Verfahren mit den Merkmalen des unabhängigen Patentanspruches 1 sowie durch eine Steuervorrichtung mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren zur Steuerung von Energieaustauschen zwischen mehreren Energiesystemen $i$ mittels einer bezüglich der Energiesysteme zentralen Steuervorrichtung, wobei die Steuerung auf zeitabhängigen und mit den Energieaustauschen assoziierten Sollleistungen basiert, die mittels einer nummerischen Optimierung basierend auf Verbrauchsprognosen $P_{i;t}^{L}$ und/oder Erzeugungsprognosen $P_{i;t}^{G}$ der einzelnen Energiesysteme für einen Zeitbereich T ermittelt werden, wobei sich durch die Differenz zwischen Gesamtverbrauchprognose $L_t = \sum_i P_{i;t}^{L}$ und Gesamterzeugungsprognose $G_t = \sum_i P_{i;t}^{G}$ eine zeitabhängige Restlast $R_t = L_t - G_t$ ausbildet, ist gekennzeichnet dadurch, dass für die Optimierung eine Zielfunktion verwendet wird, welche die zu ermittelnden Sollleistungen mit einer zeitabhängigen Restlastgewichtung $g_t$ gewichtet, wobei die Steuervorrichtung die von der Restlast $R_t$ abhängige Restlastgewichtung $g_t$ dadurch bestimmt, dass die mit der Gesamtverbrauchsprognose $L_t$ gewichtete betragsmäßige Differenz zwischen der zu berechnenden Restlastgewichtung $g_t$ und einer zeitlich konstanten Restlastgewichtung $g_0$ minimiert wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Die Energieaustausche erfolgen über ein Versorgungsnetz, insbesondere ein Stromnetz, an welchem die Energiesysteme für den Energieaustausch, beispielsweise über einen Netzanschlusspunkt, angeschlossen sind. Zur Klarstellung sei bemerkt, dass physikalisch Energie weder verbraucht noch erzeugt wird, sondern lediglich gewandelt. Dennoch wird im Rahmen eines Versorgungsnetzes, bei welchen Energiesysteme eine bestimmte Energiemenge in einer bestimmten Form ausspeisen und/oder einspeisen technisch von einem Verbrauch (englisch: Demand) beziehungsweise einer Erzeugung (englisch: Generation) gesprochen.

Die Steuervorrichtung führt zum Ermitteln der Sollleistungen, die der Steuerung der Energieaustausche zugrunde liegen beziehungsweise für diese verwendet werden, die numerische Optimierung durch. Eine Optimierung im Sinne der vorliegenden Erfindung ist ein Verfahren zur Minimierung oder Maximierung einer Zielfunktion. Die Minimierung beziehungsweise Maximierung der Zielfunktion ist typischerweise äußerst komplex und kann daher lediglich numerisch erfolgen. Die Zielfunktion charakterisiert hierbei eine Eigenschaft oder eine Größe der Energiesysteme, beispielsweise die Gesamtkohlenstoffdioxidemissionen oder die Gesamtkosten. Die Zielfunktion weist Parameter und Variablen auf. Das Ergebnis der Optimierung sind die Werte der Variablen, vorliegend die Sollleistungen. Mit anderen Worten werden die Leistungen beziehungsweise deren Werte, die innerhalb eines Zeitbereiches ausgetauscht werden sollen (Sollleistungen), durch das Minimieren oder Maximieren der Zielfunktion ermittelt. Mit anderen sind für das Steuern der Energieaustusche und somit ebenfalls des zugehörigen Versorgungsnetzes zeitabhängige Sollwerte der jeweiligen Leistungen vorgesehen, deren Werte durch ein Minimieren oder Maximieren der Zielfunktion bestimmt werden.

Weiterhin erfolgt die Optimierung typischerweise unter einer Berücksichtigung mehrerer Nebenbedingungen, beispielsweise unter Berücksichtigung von Netzrandbedingungen des Versorgungsnetzes.

Sind die Sollwerte für die Leistungen beziehungsweise der Energieaustausche wie obenstehend bestimmt, kann die Steuervorrichtung diese an die jeweiligen Energiesysteme übermitteln. Diese stellen dann zum jeweiligen Zeitpunkt die tatsächliche Leistung für das Versorgungsnetz bereit (Einspeisung) oder beziehen diese (Ausspeisung). Die energiesysteminterne Steuerung der entsprechenden energietechnischen Anlagen kann durch das Energiesystem, beispielsweise ein Energiemanagementsystem, basierend auf den durch die zentrale Steuervorrichtung ermittelten Sollwerten beziehungsweise Sollleistungen erfolgen.

Erfindungsgemäß erfolgt das Ermitteln der Sollleistungen, die zur Steuerung verwendet werden, basierend auf Verbrauchsprognosen $P_{i;t}^{L}$ und/oder Erzeugungsprognosen $P_{i;t}^{G}$ der einzelnen Energiesysteme. Hierbei sind die Prognosen zeitlichen Leistungsverläufe (Lastkurven) über den Zeitbereich $T$, beispielsweise für den kommenden Tag. Diese Leistungsprognosen können kontinuierlich oder typischerweise diskret, beispielsweise für alle 15 Minuten des kommenden Tages, vorliegen. Weiterhin können diese in der Steuervorrichtung gespeichert oder hinterlegt sein und/oder durch die Energiesysteme an die Steuervorrichtung vorab des Zeitbereiches $T$ übermittelt werden.

Durch die Prognosen ist der Steuervorrichtung somit sinnbildlich bekannt, welche Leistung zu welchem Zeitpunkt erzeugt und verbraucht werden soll. Dadurch ist die Restlast $R_t = L_t -$ $$G_t = \sum_i P_{i;t}^{L} - \sum_i P_{i;t}^{G}$$ bestimmt. Die Restlast quantifiziert somit die Differenz von Verbrauch und Erzeugung zu den jeweiligen Zeitpunkten zwischen den Energiesystemen, beispielsweise innerhalb eines lokalen Energiemarktes. Erfindungsgemäß ist der Steuervorrichtung aufgrund der Leistungsprognosen vorab der tatsächlichen Energie- beziehungsweise Leistungsaustausche somit bekannt, welche Restlast gemäß den Prognosen zu erwarten ist, beispielsweise für den kommenden Tag. Gemäß der vorliegenden Ausbildung der Restlast ist diese grundsätzlich vorzeichenbehaftet, wobei eine negative Restlast bedeutet, dass die Gesamterzeugung über dem Gesamtbedarf beziehungsweise dem Gesamtverbrauch liegt.

Gemäß der vorliegenden Erfindung wird Verbrauch und Erzeugung verbessert dadurch in Übereinstimmung gebracht, dass eine Restlastgewichtung ermittelt wird, die die Sollleistungen beziehungsweise deren Variablen innerhalb der Zielfunktion, die im Rahmen der Optimierung minimiert oder maximiert wird, gewichtet. Liegt zu einem Zeitpunkt ein größerer Wert der Restlastgewichtung vor, so führt dies durch die höhere Gewichtung typischerweise zu einer Reduzierung der zugehörigen Leistung beziehungsweise ihres Sollwertes für die Steuerung. Weiterhin kann die Leistungsaufnahme oder die Leistungsabgabe von flexiblen Verbrauchern beziehungsweise Erzeugern zu Zeitpunkten verschoben werden, die einer hohen Restlast entgegenwirken. Dadurch dann die Restlast im tatsächlichen Betrieb reduziert werden.

Aufgrund der erfindungsgemäßen Restlastgewichtung werden somit die Sollleistungen für die Steuerung derart bestimmt, dass die Restlast zu jedem Zeitpunkt möglichst minimiert wird. Mit anderen Worten erfolgen eine verbesserte Steuerung und Integration von flexiblen Verbrauchern und Erzeugern.

Erfindungsgemäße wird die Restlastgewichtung dadurch ermittelt, dass die mit der Gesamtverbrauchsprognose $L_t$ gewichtete betragsmäßige Differenz zwischen der zu berechnenden Restlastgewichtung $g_t$ und einer zeitlich konstanten Restlastgewichtung $g_0$ minimiert wird.

Mit anderen Worten soll erfindungsgemäß möglichst wenig von der typischen konstanten Gewichtung abgewichen werden, aber dennoch eine möglichst geringe Restlast erreicht werden. Das erfindungsgemäße Vorgehen zum Bestimmen der Restlastgewichtung stellt somit technisch sicher, dass eine möglichst geringe Abweichung von der konstanten Restlastgewichtung erfolgt aber dennoch der Restlast im technisch vorteilhaften Sinne (Reduzierung der Restlast) gefolgt wird. Mit anderen Worten können durch die erfindungsgemäße Restlastgewichtung lokaler Verbrauch und lokale Erzeugung verbessert in Übereinstimmung gebracht werden, wobei hierzu flexible Anlagen verwendet werden. Weiterhin ist die vorliegende Erfindung insbesondere für erneuerbare Energie vorteilhaft. Die erfindungsgemäße Restlastgewichtung hat somit die technische Wirkung, dass bei den tatsächlichen Energieaustauchen, die den ermittelten Sollleistungen entsprechen, eine geringere Restlast erreicht wird. Dadurch muss vorteilhafterweise für das Versorgungsnetz weniger Reserveleistung, beispielsweise von einem übergeordneten Versorgungsnetz, bezogen und/oder durch dieses selbst vorgehalten werden.

Die erfindungsgemäße Steuervorrichtung zur Steuerung von Energieaustauschen zwischen mehreren Energiesystemen *i* umfasst eine Recheneinheit. Erfindungsgemäß ist die Recheneinheit zur Durchführung eines Verfahrens gemäß der vorliegenden Erfindung und/oder einer ihrer Ausgestaltungen ausgebildet.

Es ergeben sich zum erfindungsgemäßen Verfahren gleichartige und gleichwertige Vorteile und/oder Ausgestaltungen.

Gemäß einer vorteilhaften Ausgestaltung der Erfindung wird die Restlastgewichtung $g_t$ durch die Form $g_t = g_0 + \alpha R_t - \beta$ gebildet, wobei die Parameter $\alpha, \beta$ und somit die Restlastgewichtung durch die Minimierung von $|\sum_{t \in T} L_t(g_0 - g_t)|$ ermittelt werden.

Vorteilhafterweise wird die Restlastgewichtung durch eine Linearkombination gebildet und ist linear abhängig von der Restlast $R_t$. Die Parameter $\alpha, \beta$ werden durch die Minimierung der mit der Gesamtverbrauchsprognose $L_t$ gewichtete betragsmäßige Differenz zwischen der zu berechnenden Restlastgewichtung $g_t$ und der zeitlich konstanten Restlastgewichtung $g_0$ ermittelt. Mit anderen Worten durch die Minimierung von $|\sum_{t \in T} L_t (g_0 - g_t)|$, das heißt $\min_{\alpha,\beta} |\sum_{t \in T} L_t (g_0 - g_t)| \rightarrow \alpha = \alpha^*, \beta = \beta^*$, wobei die mit Stern gekennzeichneten Parameter die durch die Minimierung ermittelte Werte der Parameter bezeichnen. Je höher der Wert des Parameters $\alpha$, desto höher ist die Abweichung der Restlastgewichtung von der Restlast. Durch die Ermittlung der Parameter mittels der Minimierung ist ebenfalls die Restlastgewichtung durch $g_t = g_0 + \alpha^* R_t - \beta^*$ bestimmt. Die konstante Restlastgewichtung $g_0$ kann festgelegt werden. Mathematisch äquivalente Formulierung von $\min_{\alpha,\beta} |\sum_{t \in T} L_t (g_0 - g_t)|$, beispielsweise Skalierungen und/oder Parameterwechsel sind ebenfalls umfasst. Beispielsweise ist $\min_{\alpha,\beta} |\sum_{t \in T} L_t (g_0 - g_t)|$ äquivalent zu $\min_{\alpha,\beta} |\sum_{t \in T} L_t (\alpha R_t - \beta)|$. Weiterhin kann durch die besondere Form der Restlastgewichtung die Minimierung rechnerisch schneller erfolgen.

In einer vorteilhaften Weiterbildung der Erfindung wird für die Parameter $\alpha, \beta$ die Form $\alpha = \alpha'/(R_{max} - R_{min})$ und $\beta = \alpha' R_{min}/(R_{max} - R_{min}) + \beta'$ mit den neuen Parametern $\alpha', \beta'$ und $R_{max} = \max_{t \in T}(R_t)$ sowie $R_{min} = \min_{t \in T}(R_t)$ verwendet.

Durch diese vorteilhafte Form beziehungsweise Transformation der Parameter kann weitere Rechenzeit zum Ermitteln der Restlastgewichtung eingespart werden. Dadurch kann die Restlastgewichtung effizient, ebenfalls innerhalb kurzer Zeitbereiche, beispielsweise kleiner als 15 Minuten, ermittelt werden, sodass eine Ermittlung in Echtzeit erfolgen kann. Dadurch kann die Steuerung auf die zeitabhängige Restlast beziehungsweise ihre Änderung verbessert reagieren, sodass Verbrauch und Erzeugung verbessert in Übereinstimmung gebracht werden können.

Gemäß einer vorteilhaften Ausgestaltung der Erfindung erfolgt das Minimieren von $|\sum_{t \in T} L_t(g_0 - g_t)|$ unter der Nebenbedingung $\alpha, \beta > 0$ und $\alpha_0 < \alpha < \alpha_1$.

Dadurch ist sichergestellt, dass die Parameter technisch sinnvolle Randbedingungen erfüllen, beispielsweise, dass die Restlastgewichtung im Wesentlichen der Restlast folgt, das heißt, dass die ermittelte Restlastgewichtung bei negativen Werten der Restlast typischerweise kleiner ist als bei positiven Werten der Restlast. Weiterhin kann die Minimierung bezüglich ihrer Rechenzeit verbessert werden.

In einer vorteilhaften Weiterbildung der Erfindung übermittelt jedes der Energiesysteme *i* seine Verbrauchsprognose $P_{i;t}^L$ und/oder Erzeugungsprognose $P_{i;t}^G$ an die Steuervorrichtung.

Mit anderen Worten übermitteln die Energiesysteme vorab der Energieaustausche eine Prognose für ihren zu erwartenden Verbrauch (Ausspeisung) und/oder für ihre zu erwartende Erzeugung (Einspeisung) and die Steuervorrichtung. Beispielsweise betreffen die Prognose den kommenden Tag und werden am Vortag an die Steuervorrichtung übermittelt (englisch: Day-Ahead). Weiterhin sind kurzfristigere Prognosen vorgesehen (englisch: Intra-Day). Dadurch ist die Steuervorrichtung in Kenntnis der zu erwartenden Gesamtenergie, die zu einem jeweiligen Zeitpunkt durch die Energiesysteme in das Versorgungsnetz, insbesondere Stromnetz, ausgespeist und eingespeist wird. Somit kann die Steuervorrichtung vorab die zu erwartende Restlast bestimmen. In Abhängigkeit der bestimmten Restlast ermittelt die Steuervorrichtung die Restlastgewichtung. Die ermittelte Restlastgewichtung wird zur Gewichtung der Sollleistung bei deren Bestimmung - ebenfalls durch ein Optimierungsverfahren - verwendet. Dadurch kann vorab derart Einfluss auf die für die Steuerung vorgesehenen Sollleistungen genommen werden, dass die tatsächliche Restlast, die dann bei Durchführung der Energieaustausche gemäß der ermittelten Sollleistungen auftritt, möglichst zu jedem Zeitpunkt minimiert wird. Dadurch werden Verbrauch und Erzeugung verbessert in Übereinstimmung gebracht.

Gemäß einer vorteilhaften Ausgestaltung der Erfindung wird als Zeitbereich *T* ein zukünftiger Zeitbereich, insbesondere der kommende Tag, verwendet.

Dadurch wird vorteilhafterweise eine Day-Ahead-Minimierung bezüglich der Restlast ermöglicht. Weiterhin wird dadurch die Steuerung verbessert.

In einer vorteilhaften Weiterbildung der Erfindung werden für die Verbrauchsprognose $P_{i;t}^L$ und/oder Erzeugungsprognose $P_{i;t}^G$ eine oder mehrere vergangene Leistungsprognosen verwendet.

Mit anderen Worten werden historische Leistungsprofile als Prognosen verwendet. Dadurch kann die Genauigkeit der Vorhersage der Restlast und somit das Ermitteln der Restlastgewichtung verbessert werden. Dadurch wird die Steuerung verbessert.

Gemäß einer vorteilhaften Ausgestaltung der Erfindung erfolgen die Energieaustausche über ein Versorgungsnetz, insbesondere ein Stromnetz.

Die vorliegende Erfindung und/oder einer ihrer Ausgestaltungen ist besonders für Energieaustausche von Vorteil, die über ein Stromnetz erfolgen. Das ist deshalb der Fall, da für Stromnetze Einspeisung und Ausspeisung möglichst zeitnah in Übereinstimmung zu bringen sind. Das Stromnetz kann als ein Hochspannungsnetz, Mittelspannungsnetz oder Niederspannungsnetz ausgebildet sein. Weiterhin ist die vorliegende Erfindung und/oder eine ihrer Ausgestaltungen für weitere Versorgungsnetze, insbesondere Wärmenetze, beispielsweise Fernwärmenetze oder Nahwärmenetze, vorteilhaft.

In einer vorteilhaften Weiterbildung der Erfindung wird die Restlastgewichtung $g_t$ für einen oder mehrere Netzknoten des Versorgungsnetzes berechnet.

Mit anderen Worten wird die Restlastgewichtung netzknotenabhängig ermittelt, das heißt $g_t \rightarrow g_{n;t}$, wobei der Index n den Netzknoten des Versorgungsnetzes kennzeichnet. In diesem Sinne wird die Restlastgewichtung vorteilhafterweise ortsabhängig ermittelt. Hierbei wird das oben genannte Verfahren zur Ermittlung der Restlastgewichtung derart durchgeführt, dass die Minimierung für die mehreren Netzknoten n, insbesondere für jeden der Netzknoten n des Versorgungsnetzes, durchgeführt wird. Eine Mittelung über mehrere Netzknoten und/oder ein Festlegen eines Repräsentanten für mehrere Netzknoten beziehungsweisen ein Cluster von Netzknoten kann vorgesehen sein.

Gemäß einer vorteilhaften Ausgestaltung der Erfindung wird die bestimmte zeitabhängige Restlastgewichtung $g_t$ über eine Stunde, 15 Minuten oder eine Minute gemittelt.

Dadurch kann die zeitliche Auflösung der Restlastgewichtung an die zeitlichen Anforderungen der Steuervorrichtung eingestellt werden. Beispielsweise wird die Restlastgewichtung minütlich berechnet. Berechnet die Steuervorrichtung die Sollleistungen jedoch nur für jede 15 Minuten, so kann die zum Ermitteln der Sollleistungen verwendete Restlastgewichtung sich dadurch ergeben, dass die Restlastgewichtung mit minütlicher Auflösung über 15 Minuten gemittelt wird. Diese neue zeitlich gemittelte Restlastgewichtung wird dann zum Ermitteln der Sollleistungen verwendet.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    einen zeitlichen Verlauf einer Restlast; und

Figur 2    einen zeitlichen Verlauf einer gemäß einer Ausgestaltung der vorliegenden Erfindung ermittelten Restlastgewichtung;

Gleichartige, gleichwertige oder gleichwirkende Elemente können in einer der Figuren oder in den Figuren mit denselben Bezugszeichen versehen sein.

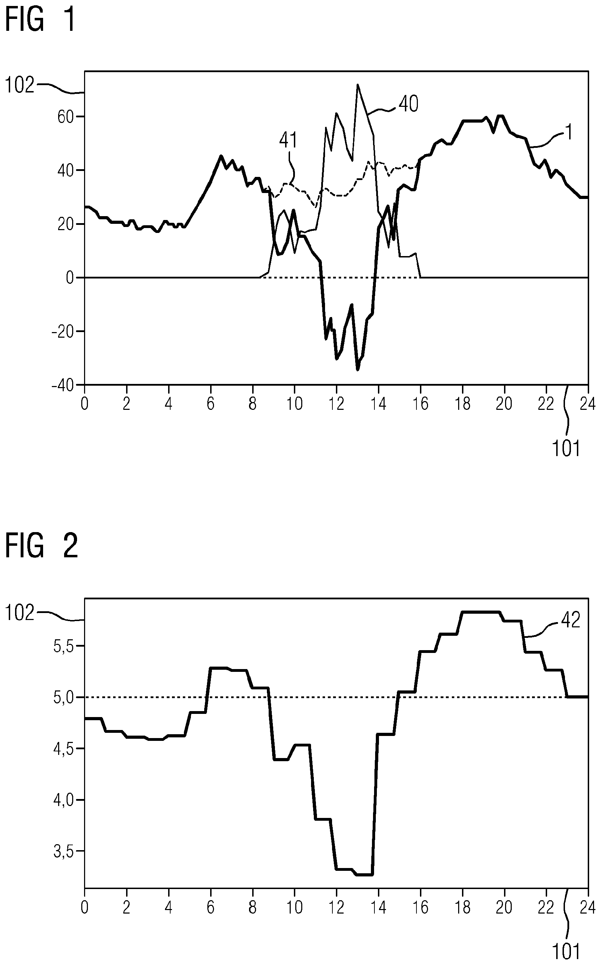

Die Figur 1 zeigt mittels eines Diagramms einen exemplarischen zeitlichen Verlauf für eine Restlast 1.

An der Abszisse 101 des Diagramms ist die Zeit in Stunden aufgetragen, das heißt das Diagramm zeigt die Restlast 1 beziehungsweise ihren zeitlichen Verlauf über einen Tag.

An der Ordinate 102 des Diagramms ist die Restlast 1 in Kilowatt aufgetragen.

Weiterhin umfasst das dargestellte Diagramm eine Gesamtverbrauchprognose 41 sowie eine Gesamterzeugungprognose 40. Die Restlast 1 bildet sich durch die Differenz von Gesamtverbrauchprognose 41 und Gesamterzeugungprognose 40 aus. Die Gesamtprognosen 40, 41 werden aus einzeln Prognosen von Energiesystemen ermittelt. Hierbei können die Energiesysteme diese energiesystemspezifischen Einzelprognose an eine Steuervorrichtung gemäß der Erfindung und/oder einer ihrer Ausgestaltungen übermitteln.

In dem dargestellten Ausführungsbeispiel wird zwischen 11:00 Uhr und 14:00 Uhr deutlich mehr Energie eingespeist, das heißt erzeugt, als ausgespeist, das heißt als verbraucht wird. Beispielsweise ist dies deshalb der Fall, da Photovoltaikanlagen zu dieser Zeit mehr Strom erzeugen, während die Haushalte weniger Strom benötigen. Dadurch bildet sich in dem genannten Zeitraum eine negative Restlast 1 aus. Am Nachmittag oder am Abend kehrt sich diese Situation um, sodass nun deutlich mehr Bedarf als durch Erzeugung gedeckt werden kann vorhanden ist. Mit anderen Worten ist in diesen Zeiträumen die Restlast 1 positiv. Technisch vorteilhaft ist es zu jedem Zeitpunkt des Tages eine Restlast 1 im Bereich von Null zu erreichen. Das heißt, dass Verbrauch und Erzeugung bestenfalls zu jedem Zeitpunkt beziehungsweise zu jedem Zeitschritt beziehungsweise innerhalb jedem Zeitintervall der zeitlichen Einteilung des Tages übereinstimmen.

Typischerweise sind innerhalb des lokalen Versorgungsnetzes, über welches die Energieaustausche erfolgen, flexible Verbraucher/Erzeuger vorhanden, das heißt energietechnische Anlagen, die Energie zumindest innerhalb festgelegter zeitlicher Grenzen flexible in das Versorgungsnetz einspeisen und/oder aus diesen ausspeisen können. Somit ist es vorteilhaft, diese flexiblen Verbraucher/Erzeuger für die Verbesserung der Restlast 1 im genannten Sinne zu verwenden und entsprechend zu Steuern. Hierzu ist erfindungsgemäße eine Restlastgewichtung vorgesehen, die in Figur 2 dargestellt ist.

Die Figur 2 zeigt ein Diagramm mit einem zeitlichen Verlauf einer Restlastgewichtung 42, die gemäß einer Ausgestaltung der vorliegenden Erfindung ermittelten wurde.

Hierbei ist an der Abszisse 101 des Diagramms die Zeit in Stunden aufgetragen, das heißt das Diagramm zeigt die Restlastgewichtung 42 beziehungsweise ihren zeitlichen Verlauf über einen Tag.

An der Ordinate 102 des Diagramms ist die Restlastgewichtung dimensionslos oder in beliebigen Einheiten aufgetragen. Grundsätzlich könnte die Restlastgewichtung 42 ebenfalls eine Dimension aufweisen, insbesondere Kohlenstoffdioxidemissionen pro Leistung, das heißt beispielsweise die Einheit kg/kW aufweisen. Dies ist im Wesentlichen von der Form der beim Bestimmen der für die Steuerung vorgesehenen Sollwerte verwendeten Zielfunktion abhängig. Werden beispielsweise zum Ermitteln der Sollleistungen die Gesamtkosten minimiert, so kann die Restlastgewichtung 42 die Einheit Kosten pro Kilowatt beziehungsweise Kosten pro Kilowattstunde aufweisen. Im Hinblick auf einen lokalen Energiemarkt könnten die Restlastgewichtung 42 als dynamische Gebühr verwendet werden. Die jeweilige Dimension beziehungsweise Einheit der Restlastgewichtung 42 ist jedoch für die vorliegende Erfindung und ihre technische Wirkung unerheblich. Entscheidend ist, dass diese die Sollleistung innerhalb der Zielfunktion, mittels welcher die Solleistungen für die Steuerung ermittelt werden, gewichtet. Mit anderen Worten sei symbolisch $Z = Z[P_{i;t}]$ die von den Sollleistungen $P_{i;t}$ abhängige Zielfunktion, die zum Ermitteln der Sollleistungen beziehungsweise ihrer Werte minimiert wird,

$$\min_{P_{i;t}} Z = Z[P_{i;t}] \rightarrow P_{i;t} = P_{i;t}^*$$

das heißt .
Dann umfasst die Zielfunktion wenigstens einen Term, mittels welchen die zu bestimmenden Sollleistungen mit der Restlastgewichtung 42 gewichtet werden, das heißt symbolisch $Z \supset \sum_{i;t \in T} g_t \cdot P_{i;t}$. Hierbei kann die Zielfunktion weitere Terme, insbesondere weitere in den Sollleistungen lineare Terme, umfassen.

In dem vorliegenden Ausführungsbeispiel wurde die im Diagramm dargestellte Restlastgewichtung 42 durch $\min_{\alpha,\beta} |\sum_{t \in T} L_t (g_0 - g_t[\alpha, \beta])|$ mit $g_t[\alpha, \beta] = g_0 + \alpha R_t$

$$L_t = \sum_i P_{i;t}^L$$

- $\beta$ ermittelt, wobei die Summe aller bereitgestellten Lastprognosen, das heißt die Gesamtverbrauchsprognose, ist. Weiterhin ist $g_0$ eine konstante Restlastgewichtung, die festgelegt und/oder in den Parameter $\beta$ mit einbezogen werden kann.

Aus dem Diagramm ist erkennbar, dass die Restlastgewichtung 42 bezüglich ihres zeitlichen Verlaufs annähernd der Restlast 1 folgt. Hierbei ist die Restlastgewichtung 42 im Gegensatz zur Restlast 1 stets positiv. Die Abweichung von der Restlast 1 ist im Wesentlich durch den Skalierungsfaktor $\alpha$ beziehungsweise seinem ermittelten Wert bestimmt. Vorliegend ist die Restlastgewichtung 42 umso größer, je größer die Restlast 1 ist. Dadurch und in Verbindung mit der Gewichtung beziehungsweise der Skalierung innerhalb der zur Steuerung zugehörigen Zielfunktion ($Z \supset \sum_{i;t \in T} g_t \cdot P_{i;t}$) werden durch die Steuerung flexible Verbraucher zu Zeitbereichen mit negativen Werten der Restlast 1 (Erzeugung dominiert) verschoben. Weiterhin werden flexible Erzeuger zu Zeitbereichen mit positiven Werten der Restlast 1 (Verbrauch dominiert) verschoben. Diese technische Verschiebung von flexiblen Verbrauchern/Erzeugern, sodass diese im Sinne der Verbesserung der Restlast 1 netzdienlich sind, wird durch die Restlastgewichtung 42 ermöglicht. Die erfindungsgemäß ermittelte und vorgesehene Restlastgewichtung 42 ermöglicht es somit Verbrauch und Erzeugung verbessert in Übereinstimmung zu bringen. Dadurch wird die Steuerung des zu den Energieaustauschen zugehörigen Versorgungsnetzes verbessert.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 1 | Restlast |
| 40 | Erzeugung |
| 41 | Verbrauch |
| 42 | Restlastgewichtung |
| 101 | Abszisse |
| 102 | Ordinate |

**Patentansprüche**

1. Verfahren zur Steuerung von Energieaustauschen zwischen mehreren Energiesystemen *i* mittels einer bezüglich der Energiesysteme zentralen Steuervorrichtung, wobei die Steuerung auf zeitabhängigen und mit den Energieaustauschen assoziierten Sollleistungen basiert, die mittels einer nummerischen Optimierung basierend auf Verbrauchsprognosen $P_{i;t}^L$ und/oder Erzeugungsprognosen $P_{i;t}^G$ der einzelnen Energiesysteme für einen Zeitbereich *T* ermittelt werden, wobei sich durch die Differenz zwischen Gesamtverbrauchsprognose $L_t = \sum_i P_{i;t}^L$ und Gesamterzeugungsprognose $G_t = \sum_i P_{i;t}^G$ eine zeitabhängige Restlast $R_t = L_t - G_t$ ausbildet, **gekennzeichnet dadurch, dass** für die Optimierung eine Zielfunktion verwendet wird, welche die zu ermittelnden Sollleistungen mit einer zeitabhängigen Restlastgewichtung $g_t$ gewichtet, wobei die Steuervorrichtung die von der Restlast $R_t$ abhängige Restlastgewichtung $g_t$ dadurch bestimmt, dass die

mit der Gesamtverbrauchsprognose $L_t$ gewichtete betragsmäßige Differenz zwischen der zu berechnenden Restlastgewichtung $g_t$ und einer zeitlich konstanten Restlastgewichtung $g_0$ minimiert wird.

2. Verfahren gemäß Anspruch 1, **gekennzeichnet dadurch, dass** die Restlastgewichtung $g_t$ durch die Form $g_t = g_0 + \alpha R_t - \beta$ gebildet wird, wobei die Parameter $\alpha$, $\beta$ und somit die Restlastgewichtung durch die Minimierung von $|\sum_{t \in T} L_t(g0 - g_t)|$ ermittelt werden.

3. Verfahren gemäß Anspruch 2, **gekennzeichnet dadurch, dass** für die Parameter $\alpha$, $\beta$ die Form $\alpha = \alpha'/(R_{max} - R_{min})$ und $\beta = \alpha' R_{min}/(R_{max} - R_{min}) + \beta'$ mit den neuen Parametern $\alpha'$, $\beta'$ und $R_{max} = max_{t \in T}(R_t)$ sowie $R_{min} = min_{t \in T}(R_t)$ verwendet wird.

4. Verfahren gemäß Anspruch 2 oder 3, **gekennzeichnet dadurch, dass** das Minimieren von $|\sum_{t \in T} L_t(g0 - g_t)|$ unter der Nebenbedingung $\alpha$, $\beta > 0$ und $\alpha_0 < \alpha < \alpha_1$ erfolgt.

5. Verfahren gemäß einem der vorhergehenden Ansprüche, **gekennzeichnet dadurch, dass** jedes der Energiesysteme $i$ seine Verbrauchsprognose $P_{i;t}^L$ und/oder Erzeugungsprognose $P_{i;t}^G$ an die Steuervorrichtung übermittelt.

6. Verfahren gemäß einem der vorhergehenden Ansprüche, **gekennzeichnet dadurch, dass** als Zeitbereich T ein zukünftiger Zeitbereich, insbesondere der kommende Tag, verwendet wird.

7. Verfahren gemäß einem der vorhergehenden Ansprüche, **gekennzeichnet dadurch, dass** für die Verbrauchsprognose $P_{i;t}^L$ und/oder Erzeugungsprognose $P_{i;t}^G$ eine oder mehrere vergangene Leistungsprognosen verwendet werden.

8. Verfahren gemäß einem der vorhergehenden Ansprüche, **gekennzeichnet dadurch, dass** die Energieaustausche über ein Versorgungsnetz, insbesondere ein Stromnetz, erfolgen.

9. Verfahren gemäß Anspruch 8, **gekennzeichnet dadurch, dass** die Restlastgewichtung $g_t$ für einen oder mehrere Netzknoten des Versorgungsnetzes berechnet wird.

10. Verfahren gemäß einem der vorhergehenden Ansprüche, **gekennzeichnet dadurch, dass** die bestimmte zeitabhängige Restlastgewichtung $g_t$ über eine Stunde, 15 Minuten oder eine Minute gemittelt wird.

11. Steuervorrichtung zur Steuerung von Energieaustauschen zwischen mehreren Energiesystemen $i$, umfassend eine Recheneinheit, **dadurch gekennzeichnet, dass** die Recheneinheit zur Durchführung eines Verfahrens gemäß einem der vorhergehenden Ansprüche ausgebildet ist.

FIG 1

FIG 2

Europäisches
Patentamt

European
Patent Office

Office européen
des brevets

# EUROPÄISCHER RECHERCHENBERICHT

Nummer der Anmeldung

EP 21 19 1897

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CA 2 749 770 C (INTEGRAL ANALYTICS INC [US]) 20. Juli 2021 (2021-07-20) * Paragraphen [000132], [000255]; Anspruch 1 * ----- | 1-11 | INV. H02J3/06 |
| Y,D | EP 3 518 369 A1 (SIEMENS AG [DE]) 31. Juli 2019 (2019-07-31) * Paragraphen [0011], [0012], [0061]-[0066]; Anspruch 1; Abbildung 1 * ----- | 1-11 | |

RECHERCHIERTE
SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 4. Februar 2022 | Meyer, Andreas Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
 **EP 21 19 1897**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**04-02-2022**

| Im Recherchenbericht angeführtes Patentdokument | Datum der Veröffentlichung | Mitglied(er) der Patentfamilie | Datum der Veröffentlichung |
|---|---|---|---|
| CA 2749770 C | 20-07-2021 | AU 2010204729 A1 | 01-09-2011 |
| | | AU 2016210607 A1 | 25-08-2016 |
| | | CA 2749770 A1 | 22-07-2010 |
| | | EP 2387776 A1 | 23-11-2011 |
| | | US 2010179704 A1 | 15-07-2010 |
| | | US 2011035073 A1 | 10-02-2011 |
| | | WO 2010083334 A1 | 22-07-2010 |
| EP 3518369 A1 | 31-07-2019 | CN 111656640 A | 11-09-2020 |
| | | DK 3707798 T3 | 17-01-2022 |
| | | EP 3518369 A1 | 31-07-2019 |
| | | EP 3707798 A1 | 16-09-2020 |
| | | PT 3707798 T | 28-12-2021 |
| | | US 2021036521 A1 | 04-02-2021 |
| | | WO 2019149428 A1 | 08-08-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1